# EUROPÄISCHE PATENTSCHRIFT

(11) **EP 1 847 485 B1**
(45) Veröffentlichungstag und Bekanntmachung des Hinweises auf die Patenterteilung: **07.01.2009**
(21) Anmeldenummer: 06290665.6
(22) Anmeldetag: 21.04.2006
(51) Int. Cl.: B65G 13/075

(54) **Rolle mit Freilauf und Bremse**
Roller with free-wheel and brake
Rouleau avec roue libre et frein

(43) Veröffentlichungstag der Anmeldung: 24.10.2007
(73) Patentinhaber: Interroll Holding AG, 6592 Sant 'Antonino (CH)
(72) Erfinder: Karcher, Xavier, 85150 La Motte Achard (FR)
(74) Vertreter: Müller-Boré & Partner Patentanwälte

(56) Entgegenhaltungen:
- WO-A-84/03685
- DE-U1- 20 212 979
- US-A- 6 131 717
- US-B1- 6 354 424

## Beschreibung

### Gebiet der Erfindung

Die Erfindung betrifft eine Förderrolle und eine Förderstrecke mit einer Förderrolle.

### Hintergrund der Erfindung und Stand der Technik

Es existieren im Stand der Technik Rollenförderer mit Rollen. Diese Rollenförderer werden z.B. in Regallagem verwendet, wobei ein Regal mehrere Rollenförderer über- und nebeneinander aufweisen kann. Auf einem Rollenförderer können mehrere Paletten mit Waren hintereinander gelagert werden, die auf den Rollen laufen.

Die Rollenförderer werden in der Regel entweder von einer Seite beladen und von der anderen Seite entladen, so daß die Güter, die zuerst auf die Rollenförderer gelangen auch wieder zuerst von dieser entladen werden. Diese Regallager werden first-in-first-out-Lager oder fifo-Lager genannt. Manche dieser fifo-Rollenförderer weisen eine vom Beladepunkt zum Entladepunkt abfallende Neigung auf, so daß Paletten, die sich auf dem Rollenförderer befinden, von der Schwerkraft in Richtung Entladepunkt befördert werden.

Bei einer anderen Alternative werden die Rollenförderer von einer Seite beladen und von der selben Seite entladen, so daß die Güter, die zuletzt auf die Rollenförderer gelangen zuerst von diesen entladen werden. Diese Regallager werden last-in-first-out-Lager oder lifo-Lager genannt. Auch diese Lager weisen z.T. eine Neigung in Richtung des Belade- bzw. Entladepunktes auf. Beim Beladen einer weiteren neuen Palette z.B. durch einen Gabelstapler werden die Paletten, die sich bereits auf dem Rollenförderer befinden, mit der neuen Palette entgegen der Steigung nach hinten geschoben. Außerdem wird durch diese Steigung bewirkt, daß die Paletten, die sich auf dem Rollenförderer befinden, immer der Schwerkraft folgend am Entladepunkt anstehen.

Um bei den Rollenförderern die Geschwindigkeit der Paletten mit den Gütern abzubremsen, werden die Rollen der Förderstrecken zum Teil mit Bremsen versehen, über welche die Geschwindigkeit der Rollen und damit der Paletten abgebremst werden kann, um zu verhindern, daß die Paletten mit zu hoher Geschwindigkeit aufeinander laufen. Dazu werden Bremsen verwendet, die im Rolleninneren der Rollen angeordnet sind.

Die US 6,131,717 offenbart eine Bremsrolle mit einer Lammellenbremse, deren Bremswirkung in einer Drehrichtung der Bremsrolle permanent wirkt, wobei über einen Freilauf gewährleistet wird, daß in die andere Drehrichtung der Bremsrolle keine Bremskraft übertragen wird.

Die DE 202 12 979 U1 offenbart eine Bremsrolle für eine Rollenbahn, mit einem zylindrischen Rollenkörper, der auf einer drehfest angebrachten Achse drehbar gelagert ist, und einem innerhalb des Rollenkörpers auf der Achse drehbar gelagerten Bremsrotor, der über ein in dem Rollenkörper angeordnetes zweistufiges Planetenübersetzungsgetriebe mit dem Rollenkörper so kinematisch verbunden ist, daß der Bremsrotor bei Drehung des Rollenkörpers gegenläufig zu diesem mit einer höheren Drehzahl als der Rollenkörper dreht, wobei die erste Stufe des Planetenübersetzungsgetriebes einen drehfest mit der Achse verbundenen ersten Planetenträger umfaßt, auf dem Planetenräder drehbar gelagert sind, die mit einem Innenzahnrad des Rollenkörpers kämmen, und wobei der erste Planetenträger mit der Achse über eine Vielzahnverbindung drehfest verbunden ist.

Derartige durch Fliehkraftbremsen gebremste Rollen können beschädigt oder zerstört werden, wenn Paletten, z.B. mittels eines Gabelstaplers, mit zu hoher Geschwindigkeit und großer Schubkraft auf die Rollenförder geschoben werden, da die Rollen und die enthaltenen Bremsvorrichtungen mit vertretbarem wirtschaftlichem Aufwand nur schwer ausreichend stabil ausgelegt werden können, um der Schubkraft des Gabelstaplers zu widerstehen. Dadurch können zusätzliche Reparatur- und Wartungskosten anfallen.

### Aufgabe

Der Erfindung liegt daher die Aufgabe zugrunde, eine Förderrolle und eine Förderstrecke mit wenigstens einer solchen Förderrolle bereitzustellen, die günstig herzustellen sind, die eine hohe Lebensdauer aufweisen und über ihre Lebensdauer geringe Wartungs- und/oder Reparaturkosten verursachen.

### Lösung der Aufgabe

Die Aufgabe wird durch die Vorrichtungen gemäß den nebengeordneten Ansprüchen gelöst. Vorteilhafte Ausführungsformen sind in den Unteransprüchen offenbart.

Ein Aspekt der Erfindung betrifft eine Förderrolle mit einem Mantelelement, einem Lager und einer Bremseinrichtung, wobei das Lager und das Mantelelement so miteinander verbunden sind, daß das Mantelelement über das Lager derart an einem Lagerpunkt lagerbar ist, daß die Förderrolle relativ zu dem Lagerpunkt um eine Drehachse verdreht werden kann, und wobei die Bremseinrichtung kinematisch zwischen dem Lagerpunkt und dem Mantelelement vorgesehen und derart gestaltet ist, daß eine Verdrehung des Mantelelements gegenüber dem Lagerpunkt um die Drehachse abhängig von der relativen Drehgeschwindigkeit zwischen dem Mantelelement und dem Lagerpunkt erschwert werden kann, wobei die Förderrolle ferner ein Umwandlungsmittel aufweist, wobei die Bremseinrichtung einen Bremsantrieb aufweist, wobei das Umwandlungsmittel derart gestaltet ist, daß über das Umwandlungsmittel eine Relativbewegung zwischen dem Mantelelement und dem Lagerpunkt in eine Antriebsbewegung eines Bremsantriebs umwandelbar ist, und wobei der Bremsantrieb so gestaltet ist, daß er eine Bremskraft der Bremseinrichtung in Abhängigkeit von der Antriebsbewegung erzeugt, gekennzeichnet durch eine Hemmeinrichtung, die an einer Stelle eines Bremsstrangs der Bremsvorrichtung zwischen dem Lagerpunkt und dem Mantelelement vorgesehen ist und abhängig von einer relativen Drehrichtung des Mantelelements gegenüber dem Lagerpunkt eine Bremswirkung der Bremseinrichtung ermöglicht oder verhindert. Dies hat den Vorteil, daß solche Förderrollen, z.B. wenn sie im Betrieb in einer Beladerichtung von einem Gabelstapler beladen werden, in dieser Richtung nicht gebremst werden, so daß sie der Kraft des Gabelstaplers keine Bremskraft entgegensetzen und daher von der Kraft des Gabelstaplers beim Beladen nicht beschädigt werden können. Demgegenüber wird eine Bremswirkung in entgegengesetzter Richtung stets ermöglicht, so daß rücklaufende Paletten gebremst werden können. Eine Abhängigkeit der Bremswirkung in rücklaufender Richtung kann je nach Einsatzgebiet einer unstetigen oder z.T. stetigen Funktion entsprechen, z.B. kann eine lineare Abhängigkeit zwischen Rotationsgeschwindigkeit und Bremskraft vorgesehen werden, wobei die Bremskraft erst ab einer Mindestgeschwindigkeit wirkt. Vorteile einer solchen Gestaltung liegen darin, daß die Bewegung der Förderrolle dazu verwendet werden kann, die Bremswirkung hervorzurufen. Zu diesem Zweck kann z.B. ein Getriebe mit einem Mitnehmer mit fliehkraftbetätigten Bremselementen einer Fliehkraftbremse verbunden werden. Es können aber auch andere Drehzahl-Kraft-Wandler Verwendung finden.

Bevorzugt ist bei einer solchen Förderrolle der Lagerpunkt aus einer Achse gebildet, die zumindest in einer Drehrichtung drehfest an einem Rollenrahmen festlegbar ist, und/oder wobei das Lager aus einem Wälzlager und/oder einem Gleitlager gebildet ist und/oder wobei die Bremseinrichtung eine Fliehkraftbremse ist, und/oder wobei die Hemmeinrichtung ein Freilauf ist. Freiläufe haben den Vorteil, daß sie leise im Betrieb sind und in freilaufender Richtung einen geringen Reibungswiderstand aufweisen. Demgegenüber weisen Verzahnungen, die mittels einer in die Verzahnung eingreifenden, federnden Klinke in einer Drehrichtung sperrbar und in der anderen Richtung freilaufend sind, den Vorteil auf, daß ein höheres Drehmoment übertragen werden kann. Wälzlager weisen gegenüber Gleitlagern einen geringeren Reibungswiderstand auf, wohingegen Gleitlager eine höhere Festigkeit bei Stoßbelastung aufweisen. Eine Fliehkraftbremse weist den Vorteil auf, daß sie selbstbetätigt ist, so daß die Fliehkraft und damit die Bremskraft abhängig von der Drehgeschwindigkeit der Bremselemente ist. Denkbar sind auch andere Gestaltungsformen von Hemmeinrichtungen, wie z.B. Kupplungen, Bremsen oder ähnliches.

Als vorteilhaft wird ferner angesehen, wenn bei einer solchen Förderrolle das Umwandlungsmittel ein Umlaufrädergetriebe ist, das im Zweiwellenbetrieb und/oder im Dreiwellenbetrieb und/oder im Mehrwellenbetrieb betreibbar ist, wobei zumindest ein erster Antrieb durch das Mantelelement oder ein mit dem Mantelelement drehfest verbundenes Teil gebildet wird, und wobei ein Abtrieb zumindest in einer Drehrichtung im wesentlichen drehfest mit dem Bremsantrieb verbunden ist und/oder ein zweiter Antrieb durch den Lagerpunkt gebildet wird. So kann z.B. auch bei einer verhältnismäßig langsamen Drehgeschwindigkeit des Mantelelements eine ausreichende Drehgeschwindigkeit eines Mitnehmers einer Fliehkraftbremse erzielt werden, um eine ausreichende Fliehkraft von Bremselementen der Fliehkraftbremse zu erzielen. Bevorzugt wird ein einstufiges oder mehrstufiges Planetengetriebe im Zweiwellenbetrieb oder im Dreiwellenbetrieb verwendet. Dabei ist der Antrieb im Lagerpunkt im Verhältnis zur Lagerung der Förderrolle in einem Rollenrahmen bevorzugt drehfest festgelegt. Möglich ist aber auch, den Lagerpunkt z.B. extern gesondert anzutreiben, so daß die Relativgeschwindigkeit zwischen den Antrieben variiert werden kann und so die Bremswirkung eingestellt werden kann.

Vorzugsweise ist eine solche Förderrolle derart gestaltet, daß die Hemmeinrichtung rahmenseitig an dem Lagerpunkt und/oder zwischen Lagerpunkt und Umwandlungsmittel und/oder innerhalb des Umwandlungsmittels und/oder zwischen Umwandlungsmittel und Bremseinrichtung und/oder zwischen Bremseinrichtung und Mantelelement vorgesehen ist. Eine rahmenseitige Anbringung der Hemmeinrichtung hat den Vorteil, daß diese leichter z.B. an existierenden Rollenförderern nachgerüstet werden kann. Außerdem ist die Hemmeinrichtung bei Wartung und Reparatur leichter zugänglich. Ein weiterer Vorteil ist, daß die übrigen Bauteile der Förderrollen gleich bleiben können, so daß derartige Förderrollen mit oder ohne Hemmeinrichtung in unterschiedlichen Förderstrecken eingesetzt werden können, so daß die Fertigung für unterschiedliche Förderrollen unter Verwendung gleicher Teile billiger wird. Eine Lagerung zwischen Lagerpunkt insbesondere einer Achse und Umwandlungsmittel insbesondere einem Planetengetriebe weist den Vorteil auf, daß eine Hemmeinrichtung nur die Drehmomente des Antriebsstrangs übertragen aber nicht die Last der Paletten aufnehmen muß. Diesen Vorteil weisen auch die anderen genannten Anbringungsarten auf. Zusätzlich weist eine Anbringung innerhalb des Umwandlungsmittels oder zwischen Bremseinrichtung und Umwandlungsmittel bzw. zwischen Bremseinrichtung und Mantelelement den Vorteil auf, daß der Anbringungsort nach Durchmesser, zu übertragenem Drehmoment und Drehzahl gewählt werden kann, so daß die Anbringung auf Anwendung und Kosten hin optimiert gewählt werden kann.

Bevorzugt ist bei einer solchen Förderrolle die Hemmeinrichtung an einer Stelle des Bremsstrangs vorgesehen, an der von der Hemmeinrichtung beim Bremsen ein minimales Drehmoment übertragen werden muß.

Ferner bevorzugt ist eine solche Förderrolle, bei der die Hemmeinrichtung an einer Stelle des Bremsstrangs vorgesehen ist, an der bei einer Drehung entgegen der Drehrichtung beim Bremsen von der Hemmeinrichtung eine minimale Differenz der Rotationsgeschwindigkeiten der Teile auf beiden Seiten der Hemmeinrichtung überbrückt werden muß.

Vorteilhaft ist bei einer solchen Förderrolle, wenn die Hemmeinrichtung an einer Stelle des Bremsstrangs vorgesehen ist, an der Stoßbelastungen, die auf die Förderrolle im Betrieb wirken, nicht auf die Hemmeinrichtung wirken, sondern über andere Elemente der Förderrolle auf den Lagerpunkt übertragen werden.

Vorteilhaft ist ferner bei einer solchen Förderrolle, wenn die Hemmeinrichtung an einer Stelle innerhalb des Mantelelements vorgesehen ist. Dies hat den Vorteil, daß die Hemmeinrichtung vor Umwelteinwirkungen geschützt ist.

Ein weiterer Aspekt der Erfindung betrifft eine Förderstrecke mit einem Rahmen dadurch gekennzeichnet, daß in dem Rahmen zumindest eine Förderrolle nach einem der vorstehenden Ansprüche gelagert ist.

Bevorzugt ist eine solche Förderstrecke gegenüber der Horizontalen in einer Förderrichtung oder entgegen der Förderrichtung geneigt, wobei die Förderrolle in einer Orientierung quer zu der Förderrichtung derart gelagert ist, daß eine Bremswirkung der Bremseinrichtung in der entlang der Förderstrecke nach unten weisenden Richtung ermöglicht und entlang der Förderstrecke nach oben weisenden Richtung verhindert wird.

Vorteilhaft ist bei einer solchen Förderstrecke, wenn sie so gestaltet ist, daß sowohl eine Beladestelle, von der aus die Förderstrecke mit Gütern beladen werden kann, als auch eine Entladestelle, von der aus die Güter wieder entladen werden können, auf derselben Seite der Förderstrecke liegen.

Bevorzugt weist eine solche Förderstrecke Förderrollen auf, bei denen die Hemmeinrichtungen jeweils an unterschiedlichen Stellen angeordnet sind, insbesondere zumindest eine Förderrolle, bei der die Hemmeinrichtung rahmenseitig am Lagerpunkt angeordnet ist, als auch zumindest eine Förderrolle, bei der die Hemmeinrichtung an einer Stelle angeordnet ist, an der Stoßbelastungen, die auf die Förderrolle im Betrieb wirken, nicht auf die Hemmeinrichtung wirken. Dies hat den Vorteil, daß in Bereichen, bei denen vermehrt Stoßbelastungen auftreten, z.B. an den Be- und Entladepunkten, die Hemmeinrichtungen so angeordnet werden können, daß sie nicht auf die Stoßbelastung ausgelegt werden müssen, während für andere Förderrollen eine kostengünstigere Anordnung gewählt werden kann. Denkbar ist ebenfalls, daß nur ein Teil der Förderrollen gebremst und/oder mit einer Hemmeinrichtung ausgestattet sind.

### Kurze Beschreibung der Zeichnungen

- Fig. 1: zeigt eine Explosionszeichnung einer bevorzugten Ausführungsform einer erfindungsgemäßen Förderrolle in einer isometrischen Ansicht,
- Fig. 2: zeigt einen Schnitt durch eine bevorzugte Ausführungsform einer erfindungsgemäßen Förderrolle und eine Draufsicht einer Stirnfläche einer Förderrolle und
- Fig. 3: zeigt eine Ausführungsform einer Hemmeinrichtung gemäß der Erfindung.

### Detaillierte Beschreibung der Zeichnungen

Im folgenden werden einzelne besonders bevorzugte Ausführungsformen der Erfindung beschrieben. Dabei weisen die einzelnen beschriebenen Ausführungsformen zum Teil Merkmale auf, die nicht zwingend erforderlich sind, um die vorliegende Erfindung auszuführen, die aber im allgemeinen als bevorzugt angesehen werden. So sollen auch Ausführungsformen als unter die Lehre der Erfindung fallend angesehen werden, die nicht alle Merkmale der im folgenden beschriebenen Ausführungsformen aufweisen, Genauso ist es denkbar, Merkmale, die in Bezug auf unterschiedliche Ausführungsformen beschrieben werden, selektiv miteinander zu kombinieren.

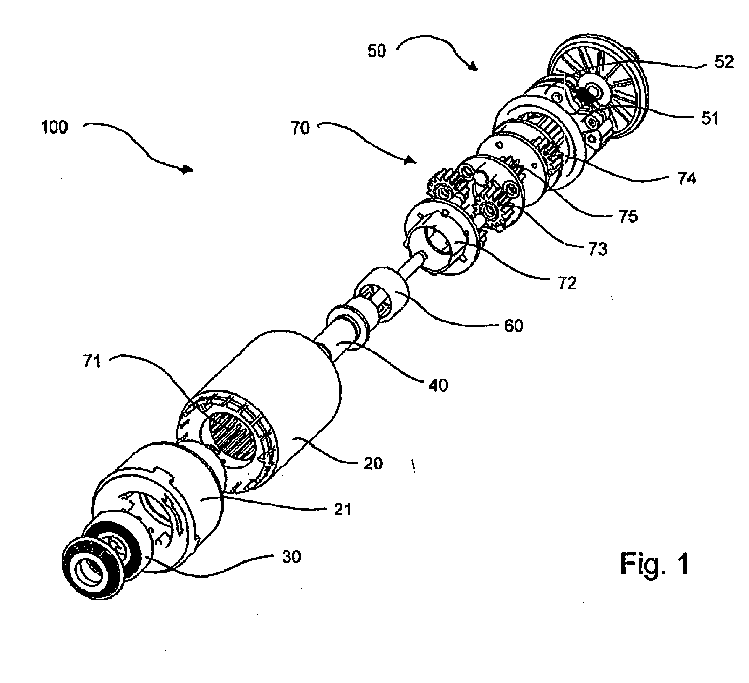

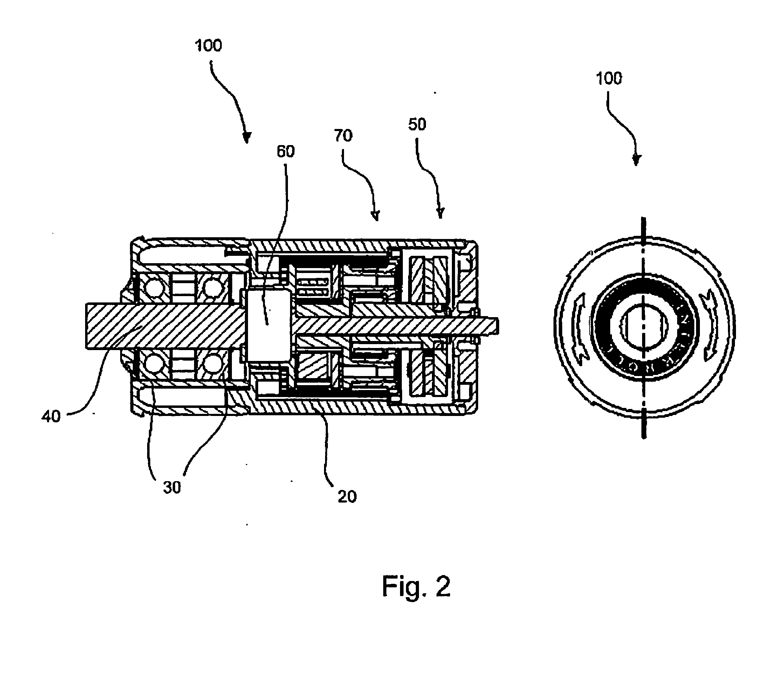

Fig. 1 zeigt eine Explosionszeichnung einer bevorzugten Ausführungsform einer erfindungsgemäßen Förderrolle in einer isometrischen Ansicht. Die dargestellte Förderrolle umfaßt ein Mantelelement 20, das auf seiner Innenseite eine Innenverzahnung 71 aufweist. Das Mantelelement 20 ist auf der in der Zeichnung links unten gezeigten Seite mit einem Anschlußelement 21 drehfest verbunden, in das konzentrisch ein Lager 30 eingesetzt ist, das in der dargestellten bevorzugten Ausführungsform aus Wälzlagem gebildet wird. In Fig. 2 ist ersichtlich, daß die Wälzlager zwei Rillenkugellager sind. Das Anschlußelement 21 weist dabei denselben Außendurchmesser auf wie das Mantelelement 20, so daß eine im wesentlichen glatte zylindrische Außenfläche der Förderrolle gebildet wird. Denkbar ist ebenfalls, daß die zylindrische Außenfläche der Förderrolle durch ein einstückiges Bauelement gebildet wird oder daß die Außenfläche aus mehreren Teilen besteht. Auch das Lager 30 kann anstelle des Wälzlagers oder zusätzlich zu dem Wälzlager andere Lagertypen aufweisen, z.B. Gleitlager. Gleitlager weisen z.B. den Vorteil auf, daß sie weniger stoßempfindlich sind und höhere Belastungen tragen können, während Wälzlager sich dadurch auszeichnen, daß sie einen besonders geringen Reibungswiderstand aufweisen.

Über das Lager 30 ist das Mantelelement 20 drehbar an einen Lagerpunkt 40 gelagert, der in der bevorzugten Ausführungsform aus einer Achse gebildet wird, die durch das Wälzlager gesteckt wird. Über die Achse wird die Förderrolle 100 an einem Rollenrahmen gelagert, der in den Figuren nicht dargestellt ist. Der Lagerpunkt 40 - in der dargestellten Ausführungsform also die Achse - wird in der Regel drehfest in dem Rollenrahmen angebracht sein. Denkbar ist aber auch, daß die Achse derart angetrieben ist, daß die Relativgeschwindigkeit zwischen Mantelelement 20 und Achse variabel geregelt werden kann.

Die Achse erstreckt sich im wesentlichen durch das Mantelelement 20 und ragt im zusammengebauten Zustand der Förderrolle 100 auf der anderen Seite aus der Förderrolle 100 hinaus. Im Inneren der Förderrolle 100 ist auf der Achse eine Hemmeinrichtung 60, ein Umwandlungsmittel 70 und eine Bremseinrichtung 50 montiert. In der dargestellten Ausführungsform ist die Hemmeinrichtung 60 als Freilauf ausgebildet und das Umwandlungsmittel 70 weist ein Umlaufrädergetriebe auf, das in der dargestellten Ausführungsform ein zweistufiges Planetengetriebe ist. Die Bremseinrichtung 50 ist als Fliehkraftbremse ausgebildet

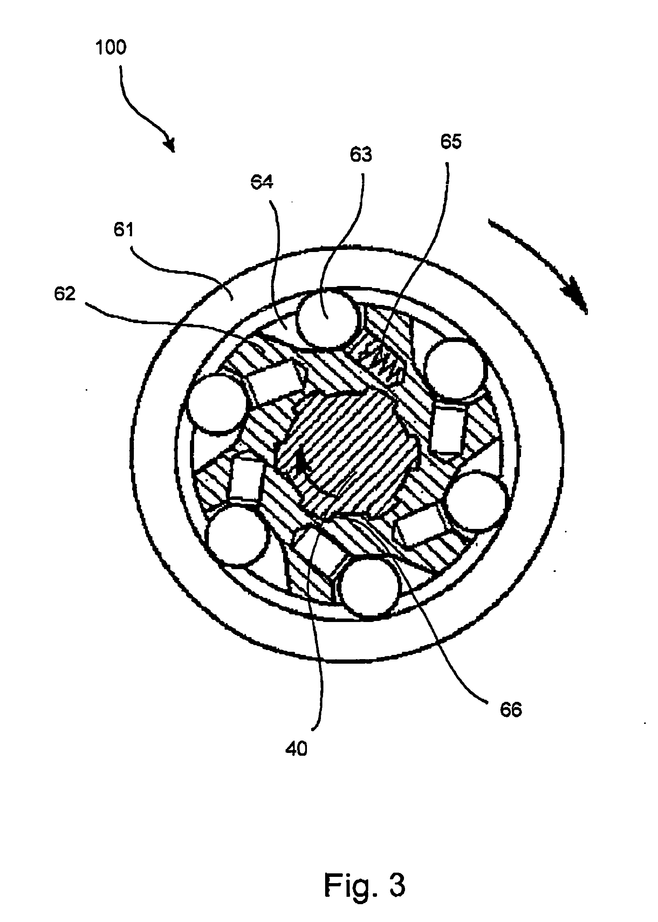

Eine Ausführungsform der Hemmeinrichtung 60 ist in Fig. 3 im Querschnitt in einem Zustand dargestellt, in dem die Hemmeinrichtung 60 auf dem Lagerpunkt 40 montiert ist. Dargestellt ist eine Keilwellenverzahnung 66 als Welle-Nabe-Verbindung zwischen einem Innenelement 62 der Hemmeinrichtung 60 und der Achse. Denkbar sind auch andere Verbindungsarten, z.B. eine Presspassung, Schrumpfpassungen, o,ä.

Die Hemmeinrichtung 60 weist ferner ein Außenelement 61 und Sperrkugeln 63 auf, die in Ausnehmungen 64 des Innenelements 62 gelagert sind und über Federelemente 65, die ebenfalls in dem Innenelement 62 aufgenommen sind, mit einer Federkraft beaufschlagt werden und von.dieser Federkraft in eine Sperrichtung gedrückt werden. Durch die Federkraft wird gewährleistet, daß die Sperrkugeln 63 jeweils mit den Oberflächen der Ausnehmungen 64 und andererseits mit der Oberfläche der Innenseite des Außenelements 61 in Kontakt stehen. Werden das Außenelement 61 und das Innenelement 62 in Sperrichtung gegeneinander verdreht, laufen die Sperrkugeln 63 auf den Flächen der Ausnehmungen 64, die in Sperrichtung ansteigen, auf. Dadurch wird die Anpreßdruck in radialer Richtung zwischen den Sperrkugeln 63 und den beiden Oberflächen der Ausnehmungen 64 und des Außenelements 61 erhöht. Durch die Erhöhung der Anpreßkraft wird auch die übertragbare Reibungskraft erhöht, so daß es in Sperrichtung zu einer Selbsthemmung zwischen dem Innenelement 62 und dem Außenelement 61 kommt. In einer Drehrichtung entgegen dieser Sperrichtung laufen die Sperrkugeln 63 in tiefere Bereiche der Ausnehmungen 64 ein, so daß ein ausreichender Abstand zwischen den Oberflächen der Ausnehmungen 64 und der Oberfläche der Innenseite des Außenelements 61 gebildet wird, so daß die Sperrkugeln 63 nur durch die Federkraft beaufschlagt an der Innenseite des Außenelements 61 anliegen. Die Kontaktkraft zwischen den Sperrkugeln 63 und der Innenoberfläche des Außenelements 61 ist dabei so gering, daß sich in einer Drehrichtung entgegen der Sperrichtung ein Schmierfilm zwischen den Sperrkugeln 63 und dem Außenelement 61 bilden kann. In dieser Drehrichtung läuft das Außenelement 61 daher im wesentlichen reibungsfrei um das Innenelement 62.

Der beschriebene Kugellagerfreilauf ist nur eine von vielen geeigneten, auf dem Markt erhältlichen Freiläufen. Erhältlich sind ebenfalls Freiläufe ohne Federung, mit zylindrischen Rollen anstelle der Kugeln und/oder Freiläufe mit Klemmkörpern. Solche Klemmkörper besitzen an den Kontaktflächen eine speziell ausgeprägte Geometrie, die in Reibkontakt mit den rotationssymmetrischen Anschlußteilen einen definierten Klemmwinkel erzeugt. Bei Lastaufnahme rollt der Klemmkörper auf seiner Klemmfläche soweit ein, bis ein Kräftegleichgewicht zwischen dem anstehenden Drehmoment und der Spannung der Freilaufteile entsteht.

Zum Teil sind solche Freiläufe nicht selbst zentrierend. Deshalb muß durch eine geeignete Lagerung der zentrische Lauf der inneren zur äußeren Klemmbahn sichergestellt werden. Entsprechend gelagerte Systemlösungen und einzelne Freiläufe sind auf dem Markt als Normteile oder als Sonderanfertigungen erhältlich.

Wie in Fig. 1 gezeigt ist, ist der Freilauf auf der Achse gelagert und verbindet eine Planetenträger 72 des Umlaufrädergetriebes mit der Achse. Dieser Planetenträger 72 ist demnach in eine Richtung auf der Achse frei drehbar, während er in der anderen Richtung auf der Achse drehfest festgelegt wird. Auf dem Planetenträger 72 befinden sich erste Planetenräder 73, die sich auf der einen Seite mit der Innenverzahnung 71 in dem Mantelelement 20 in Eingriff befinden, und die auf der anderen Seite mit einem ersten Sonnenrad 75, das drehfest an einem zweiten Planetenträger und drehbar auf der Achse ausgebildet ist. An dem zweiten Planetenträger sind wiederum zweite Planetenräder 74 drehbar gelagert, die wiederum mit der Innenverzahnung 71 des Mantelelements 20 kämmen und auf der anderen Seite mit einem in Fig. 1 nicht dargestellten zweiten Sonnenrad, das drehfest mit einem Mitnehmer 51 der Bremseinrichtung 50 verbunden ist.

Durch die dargestellte Mechanik wird eine Drehung des Mantelelements 20 in einer Sperrichtung des Freilaufs über das Umwandlungsmittel 70 in eine sehr viel schnellere Drehung des Mitnehmers 51 der Bremseinrichtung 50 übersetzt. Durch diese Drehgeschwindigkeit des Mitnehmers 51 wird ein Bremselement 52, das von dem Mitnehmer 51 mitgenommen wird, mit einer Fliehkraft beaufschlagt und mittels dieser Fliehkraft an eine Innenfläche des Mantelelements 20 gedrückt, die axial in einer Richtung nach rechts oben in Fig. 1 hinter der Innenverzahnung 71 liegt (in der Fig. 1 nicht dargestellt). Durch die unterschiedlichen Drehgeschwindigkeiten des Mitnehmers 51 und des Mantelelements 20 und durch die Andruckkraft, mit der das Bremselement 52 an die Innenfläche des Mantelelements 20 gedrückt wird, wird eine Bremskraft erzeugt, welche der Drehrichtung des Mantelelements 20 entgegenwirkt.

Bei einer Drehrichtung des Mantelelements 20 entgegen der Sperrichtung des Freilaufs hingegen ist der Kraftschluß des Mantelelements 20 auf die Bremseinrichtung 50 unterbrochen, so daß sich das Mantelelement 20 im wesentlichen ungebremst drehen kann.

Bei der in Fig. 1 gezeigten Ausführungsform ist der Freilauf, wie dargestellt, auf der Achse zwischen Achse und dem ersten Planetenträger 72 angeordnet. Denkbar sind weitere Ausführungsformen, bei denen der Freilauf entlang des Antriebsstrangs an anderen Stellen angeordnet ist. Denkbar ist es etwa, kleine Freiläufe innerhalb der Planetenräder eines der beiden Planetenradstufen oder beider Planetenradstufen vorzusehen, und/oder Freiläufe zwischen der Innenverzahnung 71 und dem Mantelelement 20 vorzusehen. Bei einer weiteren Ausführungsform kann ein solcher Freilauf außen an der Förderrolle 100 zwischen der Achse und dem Rollenrahmen angebracht werden. Der Anbringungsort von einem oder mehreren Freiläufen hängt von verschiedenen Betriebsbedingungen ab, unter denen Förderrollen eingesetzt werden.

Werden solche Förderrollen z.B. in einem Bereich einer Förderstrecke verwendet, in dem Paletten auf dem Förderer abgesetzt werden, wirken auf die Rollen verhältnismäßig große Stoßkräfte. In diesem Fall müßte ein Freilauf, der außen an der Förderrolle - also zwischen Achse und Rollenlager - angeordnet ist, auf eine entsprechende Stoßbelastung ausgelegt werden. Deshalb kann es als vorteilhaft angesehen werden, den Freilauf im Inneren der Förderrolle anzuordnen, so daß Stoßkräfte nicht von dem Freilauf, sondern von der Lagerung der Förderrolle über die Wälzlager abgefangen wird.

Andererseits kann es z.B. in einem Bereich, in dem keine oder weniger Stoßbelastungen auf die Förderrolle 100 wirken, einen Vorteil darstellen, wenn der Freilauf außen an der Förderrolle 100 angeordnet ist. An diesem Ort kann der Freilauf leicht zugänglich angebracht werden, so daß z.B. bereits bestehende Anlagen mit solchen Freiläufen nachgerüstet werden können.

Ein weiteres Kriterium für die Anordnung von Freiläufen entlang des Antriebsstrangs der Bremseinrichtung 50 hängt von der Baugröße der erhältlichen Freiläufe, von den zu übertragenden Drehmomenten und den Drehgeschwindigkeiten ab, für die Freiläufe konstruiert werden. So muß beispielsweise ein Freilauf an einem Ort wie er in Figur 1 dargestellt ist, ein verhältnismäßig hohes Drehmoment bei geringer Drehzahl übertragen, während z.B. ein Freilauf zwischen dem Sonnenrad der zweiten Planetenradstufe und dem Mitnehmer 51 der Bremseinrichtung 50 ein geringes Drehmoment bei einer großen Drehzahl übertragen müßte.

Ein Freilauf wiederum der zwischen Mantelelement 20 und der Innenverzahnung 71 angeordnet wäre, würde einen verhältnismäßig großen Durchmesser aufweisen, der an diesem Einbauort zur Verfügung steht. Daher käme eventuell ein Freilauf in Frage, der aus Kunststoffelementen hergestellt wird. Da das übertragbare Drehmoment von Freiläufen in der Regel durch die Hertz'sche Pressung zwischen den Sperrelementen und den Oberflächen des Außenelements 61 und des Innenelements 62 limitiert wird, hängt das zu übertragende Drehmoment wesentlich von den verwendeten Materialien, von den Oberflächenkrümmungen sowie von der der Sperrelemente ab. An einem Einbauort, an dem ausreichend Platz zur Verfügung steht, können daher mehrere Sperrelemente vorgesehen werden, so daß auch weniger widerstandsfähige Materialien wie z.B. Kunststoffe für die Teile in Frage kommen.

Fig. 2 zeigt einen Schnitt durch die bevorzugte Ausführungsform der Förderrolle aus Fig. 1 und eine Draufsicht einer Stirnfläche der Förderrolle. In Fig. 2 wird die Förderrolle 100 im zusammengebauten Zustand gezeigt. Die gleichen Bauelemente werden mit den gleichen Bezugszeichen wie in Fig. 1 bezeichnet.

Fig. 3 zeigt eine Ausführungsform einer Hemmeinrichtung gemäß der Erfindung.

Im folgenden wird eine Förderstrecke beschrieben, die Gegenstand der Erfindung ist. Die Förderstrecke wird ohne Bezugnahme auf die Figuren beschrieben. Eine solche Förderstrecke weist einen Rahmen auf, in dem in der Regel eine große Anzahl von Rollen gelagert wird. Diese Rollen können zum Teil gebremste Rollen sein, wie sie vorstehend beschrieben wurden. Andere Rollen können ungebremst sein. Wiederum andere Rollen können einen eigenen Antrieb aufweisen.

Eine erfindungsgemäße Förderstrecke weist zumindest eine erfindungsgemäße Förderrolle 100 auf. Bevorzugt wird eine solche Förderrolle 100 in einem Bereich der Förderstrecke angeordnet, in dem Güter, die sich auf der Förderstrecke befinden in einer Fortbewegungsrichtung gebremst werden sollen und sich in der anderen Förderrichtung ungebremst bewegen können sollen. Ein solcher Bereich existiert z.B. bei Förderstrecken und in Fließlagermodulen.

Solche Fließlagermodule weisen Lagerplätze für Paletten auf. Dabei werden auf einer Förderstrecke mehrere Paletten hintereinander gelagert, wobei die Förderstrecke von einer Seite beladen und entladen oder von einer Seite beladen und von der anderen Seite entladen wird. Förderstrecken, die von einer Seite be- und entladen werden, werden in der Regel als "last-in-first-out" oder als "lifo" - Förderstrecken bezeichnet. Bei diesen lifo-Förderstrecken wird eine Palette z.B. von einem Gabelstapler angeliefert, der Gabelstapler schiebt mit der Palette die bereits auf der Förderstrecke befindlichen anderen Paletten entgegen einer Steigung nach oben und setzt die neue Palette auf der Förderstrecke ab. Die anderen Paletten laufen dann der Schwerkraft folgend weder auf den Entladepunkt zu. Dabei sollen die Paletten in ablaufender Richtung gebremst werden, um ein Aneinanderstoßen der Paletten mit größerer Geschwindigkeit zu vermeiden.

Dabei kann es vorkommen, daß die Gabelstapler beim Anschieben der auf der Förderstrecke befindlichen Paletten diese mit einer zu großen Geschwindigkeit anschieben. Werden die Förderrollen einer solchen Förderstrecke auch in dieser Richtung gebremst, müßten die Vorderrollen der Schubkraft eines solchen Gabelstaplers widerstehen können. Daher kommen die Förderrollen entsprechend der Erfindung bevorzugt in solchen Förderstrecken zum Einsatz. Dabei werden die Förderrollen in einer solchen Förderstrecke derart eingebaut, daß die Förderrollen in Steigungsrichtung der Förderstrecke nach oben ungebremst sind, während die Bremswirkung der Förderrollen in entgegengesetzter Richtung der Förderstrecke also in ablaufende Richtung wirkt.

Bei einer solchen Förderstrecke können die Förderrollen, welche in dem Entnahme- bzw. im Beladebereich angeordnet sind, mit Freiläufen ausgestattet werden, die in einem Bereich der Förderrolle angeordnet sind, der bei Stoßbelastungen der Förderrollen nicht beeinträchtigt wird. Demgegenüber können die Rollen, die weiter entfernt von dem Entladebereich angeordnet sind, mit Freiläufen ausgestattet werden, die zwischen den Achsen der Förderrollen und dem Rahmen der Förderstrecke angeordnet sind.

### Bezugszeichenliste

- 100: Förderrolle

- 20: Mantelelement
- 21: Anschlußelement

- 30: Lager
- 40: Lagerpunkt
- 50: Bremseinrichtung
- 51: Mitnehmer
- 52: Bremselement

- 60: Hemmeinrichtung
- 61: Außenelement
- 62: Innenelement
- 63: Sperrkugel
- 64: Ausnehmung
- 65: Federelement
- 66: Keilwellenverzahnung

- 70: Umwandlungsmittel
- 72: erster Planetenträger
- 73: erste Planetenräder
- 74: zweite Planetenräder
- 75: erstes Sonnenrad

## Patentansprüche

1. Förderrolle (100) mit einem Mantelelement (20), einem Lager (30) und einer Bremseinrichtung (50), wobei das Lager (30) und das Mantelelement (20) so miteinander verbunden sind, daß das Mantelelement (20) über das Lager (30) derart an einem Lagerpunkt (40) lagerbar ist, daß die Förderrolle (100) relativ zu dem Lagerpunkt (40) um eine Drehachse verdreht werden kann, und wobei die Bremseinrichtung (50) kinematisch zwischen dem Lagerpunkt (40) und dem Mantelelement (20) vorgesehen und derart gestaltet ist, daß eine Verdrehung des Mantelelements gegenüber dem Lagerpunkt (40) um die Drehachse abhängig von der relativen Drehgeschwindigkeit zwischen dem Mantelelement (20) und dem Lagerpunkt (40) erschwert werden kann,
wobei die Förderrolle (100) ferner ein Umwandlungsmittel (70) aufweist, wobei die Bremseinrichtung (50) einen Bremsantrieb aufweist, wobei das Umwandlungsmittel (70) derart gestaltet ist, daß über das Umwandlungsmittel (70) eine Relativbewegung zwischen dem Mantelelement (20) und dem Lagerpunkt (40) in eine Antriebsbewegung eines Bremsantriebs umwandelbar ist, und wobei der Bremsantrieb so gestaltet ist, daß er eine Bremskraft der Bremseinrichtung (50) in Abhängigkeit von der Antriebsbewegung erzeugt,
**gekennzeichnet durch**
eine Hemmeinrichtung (60), die an einer Stelle eines Bremsstrangs der Bremsvorrichtung zwischen dem Lagerpunkt (40) und dem Mantelelement (20) vorgesehen ist und abhängig von einer relativen Drehrichtung des Mantelelements gegenüber dem Lagerpunkt (40) eine Bremswirkung der Bremseinrichtung (50) ermöglicht oder verhindert.

2. Förderrolle (100) nach Anspruch 1 wobei der Lagerpunkt (40) aus einer Achse gebildet wird, die drehfest an einem Rollenrahmen festlegbar ist, und/oder wobei das Lager (30) aus einem Wälzlager gebildet ist und/oder wobei die Bremseinrichtung (50) eine Fliehkraftbremse ist, und/oder wobei die Hemmeinrichtung (60) ein Freilauf ist.

3. Förderrolle (100) nach Anspruch 1 oder 2 wobei das Umwandlungsmittel (70) ein Umlaufrädergetriebe ist, das im Zweiwellenbetrieb und/oder im Dreiwellenbetrieb und/oder im Mehrwellenbetrieb betreibbar ist, wobei zumindest ein erster Antrieb durch das Mantelelement (20) gebildet wird, ein Abtrieb drehfest mit dem Bremsantrieb verbunden ist und/oder ein zweiter Antrieb durch den Lagerpunkt (40) gebildet wird.

4. Förderrolle (100) nach einem der vorstehenden Ansprüche, wobei die Hemmeinrichtung (60) rahmenseitig an dem Lagerpunkt (40) und/oder zwischen Lagerpunkt (40) und Umwandlungsmittel (70) und/oder innerhalb des Umwandlungsmittels und/oder zwischen Umwandlungsmittel (70) und Bremseinrichtung (50) und/oder zwischen Bremseinrichtung (50) und Mantelelement (20) vorgesehen ist.

5. Förderrolle (100) nach einem der vorstehenden Ansprüche, wobei die Hemmeinrichtung (60) an einer Stelle des Bremsstrangs vorgesehen ist, an der von der Hemmeinrichtung (60) beim Bremsen ein minimales Drehmoment übertragen werden muß.

6. Förderrolle (100) nach einem der vorstehenden Ansprüche, wobei die Hemmeinrichtung (60) an einer Stelle des Bremsstrangs vorgesehen ist, an der bei einer Drehung entgegen der Drehrichtung beim Bremsen von der Hemmeinrichtung (60) eine minimale Differenz der Rotationsgeschwindigkeiten der Teile auf beiden Seiten der Hemmeinrichtung (60) überbrückt werden muß.

7. Förderrolle (100) nach einem der vorstehenden Ansprüche, wobei die Hemmeinrichtung (60) an einer Stelle des Bremsstrangs vorgesehen ist, an der Stoßbelastungen, die auf die Förderrolle (100) im Betrieb wirken, nicht auf die Hemmeinrichtung (60) wirken, sondern über andere Elemente der Förderrolle (100) auf den Lagerpunkt (40) übertragen werden.

8. Förderrolle (100) nach einem der vorstehenden Ansprüche, wobei die Hemmeinrichtung (60) an einer Stelle innerhalb des Mantelelements vorgesehen ist.

9. Förderstrecke mit einem Rahmen **dadurch gekennzeichnet, daß** in dem Rahmen zumindest eine Förderrolle (100) nach einem der vorstehenden Ansprüche gelagert ist.

10. Förderstrecke nach Anspruch 9, die gegenüber der Horizontalen in einer Förderrichtung oder entgegen der Förderrichtung geneigt ist, wobei die Förderrolle (100) in einer Orientierung quer zu der Förderrichtung derart gelagert ist, daß eine Bremswirkung der Bremseinrichtung (50) in der entlang der Förderstrecke nach unten weisenden Richtung ermöglicht und entlang der Förderstrecke nach oben weisenden Richtung verhindert wird.

11. Förderstrecke nach Anspruch 9 oder 10, die so gestaltet ist, daß sowohl eine Beladestelle, von der aus die Förderstrecke mit Gütern beladen werden kann, als auch eine Entladestelle, von der aus die Gütern wieder entladen werden können, auf derselben Seite der Förderstrecke liegen.

12. Förderstrecke nach einem der Ansprüche 9 bis 11 die Förderrollen aufweist, bei denen die Hemmeinrichtungen jeweils an unterschiedlichen Stellen angeordnet sind, insbesondere zumindest eine Förderrolle, bei der die Hemmeinrichtung (60) rahmenseitig am Lagerpunkt (40) angeordnet ist, als auch zumindest eine Förderrolle, bei der die Hemmeinrichtung (60) an einer Stelle angeordnet ist, an der Stoßbelastungen, die auf die Förderrolle im Betrieb wirken, nicht auf die Hemmeinrichtung (60) wirken.

## Claims

1. A conveying roller (100) comprising a casing element (20), a bearing (30) and a braking device (50), wherein the bearing (30) and the casing element (20) are connected to one another such that the casing element (20) can be mounted via the bearing (30) on a bearing point (40) in such a way that the conveying roller (100) can be rotated relative to the bearing point (40) about an axis of rotation, and wherein the braking device (50) is provided kinematically between the bearing point (40) and the casing element (20) and is designed in such a way that a rotation of the casing element with respect to the bearing point (40) about the axis of rotation can be made more difficult as a function of the relative rotational speed between the casing element (20) and the bearing point (40),
wherein the conveying roller further comprises a conversion means, wherein the braking device comprises a braking drive, wherein the conversion means is designed in such a way that a relative movement between the casing element and the bearing point can be converted via the conversion means into a drive moment of a braking drive, and wherein the braking drive is designed in such a way that it produces a braking force of the braking device as a function of the drive moment, **characterized**
**characterized by** an inhibiting device (60) which is provided at a point on a braking train of the braking device between the bearing point (40) and the casing element (20) and allows or prevents a braking action of the braking device (50) as a function of a relative direction of rotation of the casing element with respect to the bearing point (40).

2. The conveying roller (100) as claimed in claim 1, wherein the bearing point (40) is formed from an axle which can be fastened in a rotationally fixed manner to a roller frame, and/or wherein the bearing (30) is formed from a rolling bearing and/or wherein the braking device (50) is a centrifugal brake, and/or wherein the inhibiting device (60) is a freewheel.

3. The conveying roller (100) as claimed in claim 1 or 2, wherein the conversion means (70) is an epicyclic gearset which can be operated in two-shaft operation and/or in three-shaft operation and/or in multishaft operation, wherein at least a first drive is formed by the casing element (20), an output is connected in a rotationally fixed manner to the braking drive and/or a second drive is formed by the bearing point (40).

4. The conveying roller (100) as claimed in one of the preceding claims, wherein the inhibiting device (60) is provided on the frame side on the bearing point (40) and/or between the bearing point (40) and conversion means (70) and/or inside the conversion means and/or between the conversion means (70) and braking device (50) and/or between the braking device (50) and casing element (20).

5. The conveying roller (100) as claimed in one of the preceding claims, wherein the inhibiting device (60) is provided at a point on the braking train at which a minimum torque has to be transmitted by the inhibiting device (60) during braking.

6. The conveying roller (100) as claimed in one of the preceding claims, wherein the inhibiting device (60) is provided at a point on the braking train at which a minimum difference in the speeds of rotation of the parts on both sides of the inhibiting device (60) has to be bridged by the inhibiting device (60) during a rotation counter to the direction of rotation during braking.

7. The conveying roller (100) as claimed in one of the preceding claims, wherein the inhibiting device (60) is provided at a point on the braking train at which impact loads which act on the conveying roller (100) during operation do not act on the inhibiting device (60) but are transmitted via other elements of the conveying roller (100) to the bearing point (40).

8. The conveying roller (100) as claimed in one of the preceding-daims, wherein the inhibiting device (60) is provided at a point inside the casing element.

9. A conveying path comprising a frame, **characterized in that** at least one conveying roller (100) as claimed in one of the preceding claims is mounted in the frame.

10. The conveying path as claimed in claim 9, which is inclined with respect to the horizontal in a conveying direction or counter to the conveying direction, wherein the conveying roller (100) is mounted in an orientation transversely to the conveying direction in such a way that a braking action of the braking device (50) is allowed in the direction facing downward along the conveying path and prevented in the direction facing upward along the conveying path.

11. The conveying path as claimed in claim 9 or 10, which is designed such that both a loading point, from which the conveying path can be loaded with goods, and an unloading point, from which the goods can be unloaded again, are situated on the same side of the conveying path.

12. The conveying path as claimed in one of claims 9 to 11, which comprises conveying rollers in which the inhibiting devices are each arranged at different points, in particular at least one conveying roller in which the inhibiting device (60) is arranged on the frame side on the bearing point (40), and also at least one conveying roller in which the inhibiting device (60) is arranged at a point at which impact loads which act on the conveying roller during operation do not act on the inhibiting device (60).

## Revendications

1. Rouleau de convoyage (100) comprenant un élément faisant enveloppe (20), un palier (30) et un dispositif de freinage (50), dans lequel le palier (30) et l'élément faisant enveloppe (20) sont reliés l'un à l'autre de telle sorte que l'élément faisant enveloppe (20) peut être monté sur un point de support (40) par l'intermédiaire du palier (30) de telle sorte que le rouleau de convoyage (100) peut être tourné autour d'un axe de rotation par rapport au point de support (40), et dans lequel le dispositif de freinage (50) est prévu de manière cinématique entre le point de support (40) et l'élément faisant enveloppe (20) et est conçu de telle sorte qu'une rotation de l'élément faisant enveloppe à l'opposé du point de support (40) autour de l'axe de rotation peut être rendue plus difficile en fonction de la vitesse de rotation relative entre l'élément faisant enveloppe (20) et le point de support (40),
dans lequel le rouleau de convoyage (100) présente en outre un moyen de conversion (70), dans lequel le dispositif de freinage (50) présente un entraînement de freinage,
dans lequel le moyen de conversion (70) est conçu de telle sorte qu'un mouvement relatif entre l'élément faisant enveloppe (20) et le point de support (40) peut être converti en un mouvement d'entraînement d'un entraînement de freinage par l'intermédiaire du moyen de conversion (70), et dans lequel l'entraînement de freinage est conçu de manière à générer une force de freinage du dispositif de freinage (50) en dépendance du mouvement d'entraînement, _
**caractérisé par**
un dispositif de blocage (60) qui est prévu sur un endroit d'une conduite de frein du dispositif de freinage entre le point de support (40) et l'élément faisant enveloppe (20), et qui permet ou empêche un effet de freinage du dispositif de freinage (50), en fonction d'un mouvement de rotation relatif de l'élément faisant enveloppe par rapport au point de support (40).

2. Rouleau de convoyage (100) selon la revendication 1, dans lequel le point de support (40) est formé à partir d'un axe qui peut être fixé sur un châssis de rouleaux de manière solidaire en rotation, et/ou dans lequel le palier (30) est formé à partir d'un appui à rouleaux, et/ou dans lequel le dispositif de freinage (50) est un frein à force centrifuge, et/ou dans lequel le dispositif de blocage (60) est une roue libre.

3. Rouleau de convoyage (100) selon l'une ou l'autre des revendications 1 et 2, dans lequel le moyen de conversion (70) est un engrenage à roues planétaires qui peut fonctionner dans le mode à deux arbres et/ou dans le mode à trois arbres et/ou dans le mode à plusieurs arbres, et dans lequel au moins un premier élément menant est formé par l'élément faisant enveloppe (20), un élément mené est relié à l'entraînement de freinage de manière solidaire en rotation et/ou dans lequel un second élément menant est formé par le point de support (40).

4. Rouleau de convoyage (100) selon l'une des revendications précédentes, dans lequel le dispositif de blocage (60) est prévu du côté de châssis sur le point de support (40) et/ou entre le point de support (40) et le moyen de conversion (70) et/ou à l'intérieur du moyen de conversion et/ou entre le moyen de conversion (70) et le dispositif de freinage (50) et/ou entre le dispositif de freinage (50) et l'élément faisant enveloppe (20).

5. Rouleau de convoyage (100) selon l'une des revendications précédentes, dans lequel le dispositif de blocage (60) est prévu à un endroit de la conduite de frein, sur lequel un couple de rotation minimal doit être transmis par le dispositif de blocage (60) pendant le freinage.

6. Rouleau de convoyage (100) selon l'une des revendications précédentes, dans lequel le dispositif de blocage (60) est prévu à un endroit de la conduite de frein, sur lequel une différence minimale des vitesses de rotation des pièces sur les deux côtés du dispositif de blocage (60) doit être pontée par le dispositif de blocage (60) lors d'une rotation dans le sens inverse au sens de rotation pendant le freinage.

7. Rouleau de convoyage (100) selon l'une des revendications précédentes, dans lequel le dispositif de blocage (60) est prévu à un endroit de la conduite de frein, sur lequel des sollicitations par à coups qui agissent sur le rouleau de convoyage (100) pendant le fonctionnement, n'agissent pas sur le dispositif de blocage (60), mais sont transmises sur d'autres éléments du rouleau de convoyage (100) sur le point de support (40).

8. Rouleau de convoyage (100) selon l'une des revendications précédentes, dans lequel le dispositif de blocage (60) est prévu à un endroit à l'intérieur de l'élément faisant enveloppe.

9. Trajectoire de convoyage comprenant un châssis, **caractérisé en ce qu'**au moins un rouleau de convoyage (100) selon l'une des revendications précédentes est monté dans le châssis.

10. Trajectoire de convoyage selon la revendication 9, laquelle est inclinée dans une direction de convoyage ou à l'opposé de la direction de convoyage par rapport à l'horizontale, dans laquelle le rouleau de convoyage (100) est monté selon une orientation perpendiculairement à la direction de convoyage de telle sorte qu'un effet de freinage du dispositif de freinage (50) est rendu possible dans la direction montrant vers le bas le long de la trajectoire de convoyage et est empêché dans la direction montrant vers le haut le long de la trajectoire de convoyage.

11. Trajectoire de convoyage selon l'une ou l'autre des revendications 9 et 10, laquelle est conçue de telle sorte que, aussi bien un endroit de chargement depuis lequel la trajectoire de convoyage peut être chargée avec des marchandises, qu'un endroit de déchargement depuis lequel les marchandises peuvent être à nouveau déchargées, se trouvent sur le même côté de la trajectoire de convoyage.

12. Trajectoire de convoyage selon l'une des revendications 9 à 11, laquelle présente des rouleaux de convoyage dans lesquels les dispositifs de blocage sont agencés respectivement à des endroits différents, en particulier au moins un rouleau de convoyage dans lequel le dispositif de blocage (60) est agencé du côté de châssis sur le point de support (40), ainsi qu'au moins un rouleau de convoyage dans lequel le dispositif de blocage (60) est agencé sur un endroit sur lequel des sollicitations par à coups qui agissent sur le rouleau de convoyage pendant le fonctionnement, n'agissent pas sur le dispositif de blocage (60).
